# NEW EUROPEAN PATENT SPECIFICATION

(11) **EP 0 833 291 B2**
(45) Date of publication and mention of the opposition decision: **15.06.2011**
(45) Mention of the grant of the patent: 05.03.2003
(21) Application number: 97116904.0
(22) Date of filing: 29.09.1997
(51) Int. Cl.: G08G 1/0968

(54) **Vehicle navigation apparatus and storage medium**
Fahrzeugnavigationsgerät und Speichermedium
Appareil de navigation pour véhicule et moyen de mémorisation

(30) Priority: 30.09.1996 JP 25871496; 30.09.1996 JP 25988996
(43) Date of publication of application: 01.04.1998
(60) Divisional application: 01118769.7
(73) Proprietor: AISIN AW CO., LTD., Anjo-shi, Aichi 444-1192 (JP)
(72) Inventor: Nimura, Mitsuhiro, Anjo-shi, Aichi 444-11 (JP); Kato, Kiyohide, Anjo-shi, Aichi 444-11 (JP); Ito, Yasunobu, Anjo-shi, Aichi 444-11 (JP)
(74) Representative: Kramer - Barske - Schmidtchen

(56) References cited:
- EP-A- 0 349 652
- EP-A2- 0 583 773
- US-A- 5 243 528
- US-A- 5 303 159
- US-A- 5 414 629
- US-A- 5 430 655
- US-A- 5 442 349

## Description

The present invention relates generally to vehicle navigation apparatus and, more particularly, to automatic re-search schemes for use when an out-of-the-route event occurs.

Conventionally, a vehicle navigation apparatus has been known which is designed to search for a guidance route to a destination upon input of a destination, a pass-through location, a facility to see and the like, thus providing guidance along the searched route. Generally, such apparatus comes with a function of automatically searching again or "re-searching" when a vehicle is out of the guidance route. In the automatic re-searching scheme, when it is detected that a present vehicle position is out of the guidance route, a search is made with respect to the entire route covering a full range toward the destination; or alternatively, a route returning to the original route is searched for by use of road information as to certain area near or around the present position.

With the scheme of searching for the entire route to a destination when the vehicle becomes out of the guidance route, it does take much time to complete an intended search. Then, in order to reduce the search time, some ordinary systems are designed to search for a route returning at the original route by using the road information at a nearby area near or around 'a present vehicle position; however, this scheme does not come without the accompanying problem that any route which does not meet drivers' intentions or preferences can be frequently searched resulting in a risk of forcing them to travel along an unwanted long distance way. This is because of the fact that the above scheme regards a return to the original route as a preference.

Conventionally, in vehicle navigation apparatus for permitting input of a destination, pass-through point, facility to see, and the like, for searching for a guidance route to a destination, and for providing guidance along the route searched, there has been known the one which displays on a guidance screen facility marks (landmarks) such as gas stations, banks, convenience stores, and the like. Another one has been proposed which is capable of offering selectivity such landmarks to be displayed on the guidance screen; for example, it is designed so that in cases where immediate approach to a nearby gas station is required due to shortage of vehicle fuel, it displays marks representative of gas stations thereby enabling a vehicle driver to find the nearest one from among them. In displaying of such landmarks in the prior art navigation apparatus, there has been a drawback that where a great number of facilities are present as landmarks within an area being displayed on the guidance screen, if these are displayed automatically, an inherent or original map is under such landmarks and is then difficult to see, causing visual recognizability to likewise decrease.

EP 0 583 773 A2 discloses a vehicle navigation apparatus having a route re-search function, which always performs a peripheral route search and which performs, in case the peripheral route search fails, a whole route search thereafter, which re-search function is performed in response to a route re-search instruction based on the detection of a route deviation.

US 5,243,528 discloses a vehicle navigation apparatus offering a route re-search in response to the detection of a route deviation, in which the route re-search and the type of the route re-search processing have to be input manually by the user.

JP 8-201 091 (A) discloses a route guidance system selecting a whole route search instead of a return route search, if the value of a counter counting off-route-events exceeds a preset value.

It is an object of the invention to provide a vehicle navigation apparatus capable of reducing a search time duration while enabling provision of acceptable guidance which meets drivers' preferences, by selectively making use of either one of the entire route search and nearby-area route search in conformity with conditions upon occurrence of such out-of-the-route event.

The object is solved by a vehicle navigation apparatus according to claim 1.

An explanation will now be given of embodiments of the present invention hereinafter, with reference to the drawings:
Fig. 1 is a diagram showing one embodiment of the vehicle navigation apparatus to which the present invention is applied.
Fig. 2 is a diagram showing one exemplary configuration of major data files in accordance with the invention.
Fig. 3 is a diagram showing an exemplary configuration of major data files in accordance with the invention.
Fig. 4 is a diagram showing one exemplary configuration of major data files in accordance with the invention.
Fig. 5 is a diagram showing landmark data.
Fig. 6 is a diagram for explanation of the flow of an entire system of the vehicle navigation apparatus.
Fig. 7 is a diagram showing a search processing flow.
Fig. 8 is a diagram for explanation of a method of judging whether guidance is required or not.
Fig. 9 is a diagram showing a table of a predetermined number.
Fig. 10 is a diagram for explanation of a re-search method.
Fig. 11 is a diagram for explanation of one example of a case of occurrence of an out-of-the-route along a loop-like road.
Fig. 12 is a diagram for explanation of one example of a case of sequential occurrences of out-of-the-route events.

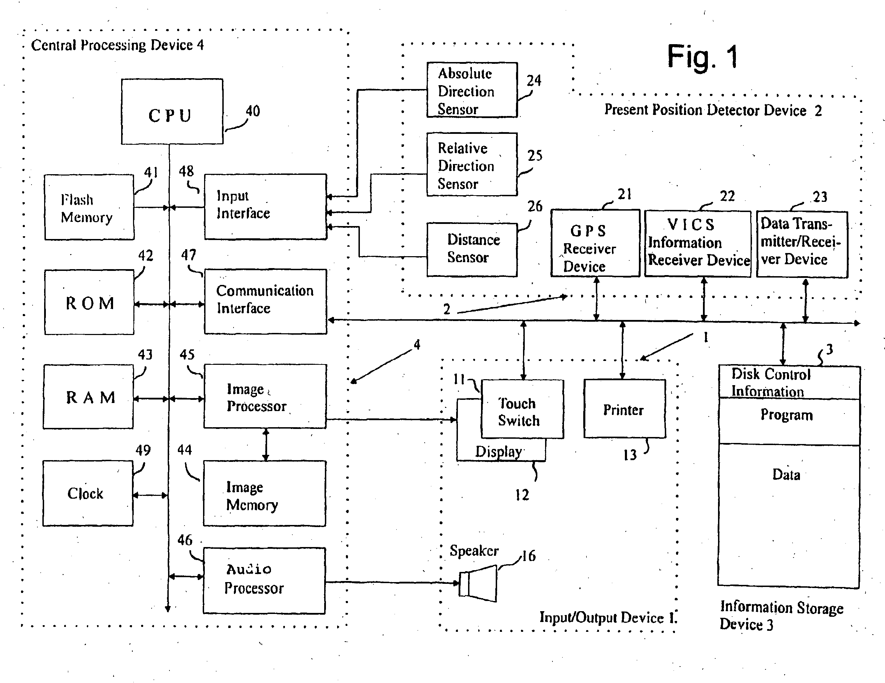

Fig. 1 is a diagram showing a first embodiment of the vehicle navigation apparatus to which the invention is applied.

As shown in Fig. 1, the vehicle navigation apparatus in accordance with the present invention is constituted from an input/output device 1 for inputting and outputting information as to route guidance, a present position detection device 2 for detecting information concerning a present position of a vehicle to which the apparatus is implemented, an information storage device 3 which records therein navigation data as required for calculation of routes, display/audio guidance data as necessary for route guidance, programs (applications and/or OS) and the like, and a central processing device 4 which performs display/audio guidance processings required for route search processings and route guidance and which also provides control over the entire system. First of all, the arrangement of respective devices will be explained below.

The input/output device 1 is provided with functions of instructing navigation processings to the central processing device 4 in conformity with a driver's will and of printing out processed data, thereby permitting input of a target place or destination and output of guidance information via audio and/or display when required by the driver. As a means for attaining such functions, its input section has a touch switch 11 and operation switches for input of a destination based on the telephone number and map coordinates thereof as well as for request of route guidance. Obviously, this may alternatively be an input device such as a remote controller or the like. In addition, an output section includes a display unit 12 which displays input data and also automatically displays route guidance as graphic images on the screen upon reception of a request from the driver, a printer 13 which produces prints of data as processed by the central processing device 4 and those data as stored in the information storage device 3, and a speaker 16 for output of resultant route guidance using voices.

Here, there may be added a voice recognition device for enabling voice input and a record card reader device for reading data recorded in IC cards or magnetic cards. There may also be added a data communication device which is for data communications between the navigation apparatus and certain information sources including an information center for storing therein data necessary for navigation and providing information via communication lines upon drivers' requests, and an electronic personal information management tool prestoring drivers' specific data such as map data, destination data and the like.

The display unit 12 is constituted by a color CRT or color liquid crystal display panel, for color-display outputting all the screens necessary for navigation including a route setting screen, route segment drawing screen, traffic intersection drawing screen and the like based on map data and guidance data to be processed by the central processing device 4, and also for displaying on the screen some buttons for use in performing operations for setting route guidance and changing guidance and screens during route guidance. Especially, pass-through intersection information such as the name or title of an intersection to be passed through will be color-displayed on the route-segment drawing screen in a pop-up manner at any time as necessary.

This display 12 is provided within an instrumental panel near the driver's seat, thus enabling the driver to affirm a present location of his or her vehicle by viewing a route-segment drawing while acquiring therefrom information as to a future route from here. The display 12 is also provided with a touch switch 11 corresponding to the display of function buttons, and is thus arranged so that the aforesaid operations are effectuated on the basis of a signal as input upon touch of an appropriate button. An input signal generator means which is structured from this button and the touch switch and the like may constitute the input section; however, a detailed description thereof will here be omitted.

The present position detection means 2 is an apparatus which is constituted from a GPS receiver device 21 for acquiring information by utilizing the present position satellite global positioning system (GPS) for vehicles; a VICS information receiver device 22 for acquiring information by use of FM multiple broadcasts, radio wave beacon, optical beacon, and the like; a data transmitter/receiver device 23 for bidirectionally communicating―by use of a mobile telephone set, personal computer, or the like―information with the information center (ATIS, for example) and with other vehicles; an absolute direction sensor 24 for detecting the travelling direction of the vehicle on the absolute direction basis by utilizing geomagnetism, by way of example; a relative direction sensor 25 for detection of the travelling direction of the vehicle on the relative direction basis by use of a steering sensor or gyro sensor, for instance; and, a distance sensor 26 for detection of the travelled distance of the vehicle from the number of rotation of a wheel shaft, for example, and which apparatus operates to transmit and/or receive, for example, road information and traffic information that are information concerning the vehicle's travel and to detect information as to a present vehicle position and further to transmit/receive information as to the present position.

The information storage device 3 is an external storage device which stores therein programs and data for navigation, and may be comprised of a CD-ROM, by way of example. The programs may involve a program for use in performing processings such as route search, automatic re-search (peripheral or "nearby-area" route search, entire or "full-range" route search) and the like, a processing program as will be later shown in a flowchart in connection with one illustrative embodiment, a program for carrying out display output control required for route guidance and voice output control as required for voice guidance as well as associated data, and further display information data required for both route guidance and map display. The data may be all of the stored data as necessary for the navigation apparatus, and may consist of several kinds of data files such as map data, search data, guidance data, map-matching data, destination data, registered location data, road data, genre-dependent data, and the like. It should be noted here that the present invention may also be applied to those of the type as designed to employ the CD-ROM for exclusive storage of data with the programs being separately stored in the central processing device.

The central processing device 4 is equipped with a CPU 40 for performing a variety of kinds of arithmetic processing, a flash memory 41 for reading programs out of the CD-ROM of the information storage device 3 and storing the same therein, a ROM 42 for storage of a program for executing program-check and update processings of the flash memory 41 (program read-in means), a RAM 43 for temporarily storing therein searched route guidance information such as the point coordinates of a destination being set presently, road name code number and the like along with data being subjected to arithmetic processing, an image memory 44 for storage of image data to be used for screen display onto the display, an image processor 45 which fetches image data from the image memory 44 on the basis of a display output control signal from the CPU 40 and applies thereto image processings to output the result to the display, an audio processor 46 which synthesizes together an audible voice, phrase, sentence with one meaning, sound and the like read from the information storage device 3 on the basis of the audible output control signal made in CPU and converts a synthesized signal into an analog signal which is output to the speaker 16, a communication interface 47 for handling input/output data over communication channels, a sensor input interface 48 for fetching sensor signals from the present position detection device 2, a clock 49 for writing date and time into internal dialog information, and others. Here, the apparatus is arranged so that route guidance is provided by using both screen display and audible output while allowing the driver to select the presence or absence of audio or voice output.

It should be noted that the program for performing the aforesaid update processing may alternatively be stored in an external storage device.

All of the programs in accordance with the present invention as well as the other programs required for performing navigation may be stored in the CD-ROM which is one external storage medium; alternatively, part or all of such programs may be stored in the ROM 42 on the side of the main body.

A variety of kinds of navigation functions may be attained by performing arithmetic processing procedures in such a way that the data and programs stored in this external storage medium are input as external signals to the central processing device within the main body of the navigation apparatus.

The navigation apparatus in accordance with the present invention includes a relatively large capacity flash memory 41 for reading certain program(s) out of the CD-ROM that is one external storage device as described previously, and a small capacity ROM 42 which prestores therein a program (program read-in means) for performing a start-up processing of a CD. The flash memory 41 is the one which continues holding therein once-stored information after interruption of power supply thereto; namely, it is a nonvolatile memory means. And, it performs the CD start-up processing by causing certain program of the ROM 42 acting as the program read-in means to get started for checking the program stored in the flash memory 41 while reading disk control information and the like of the CD-ROM of the information storage device 3. The program load processing (update processing) is done by judgment based on this information and the status of the flash memory 41.

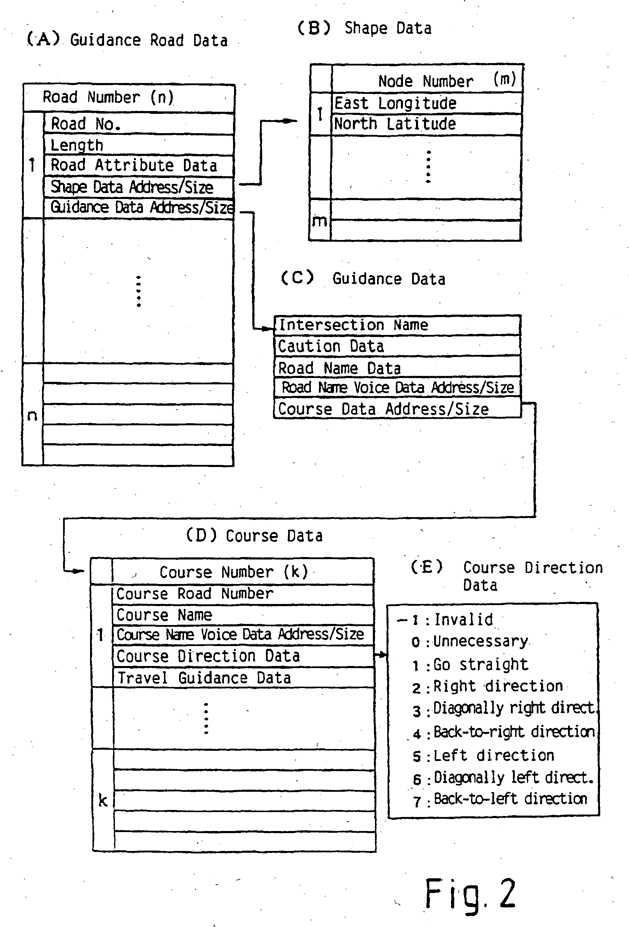

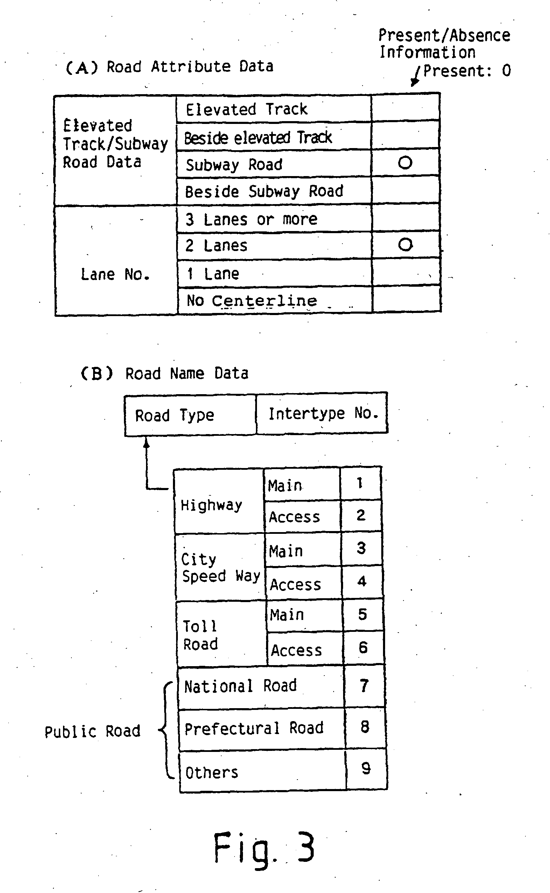

Figs. 2 to 4 show exemplary configuration of major data files as stored in the information storage device 3 embodying the invention shown in Fig. 1. Fig. 2(A) shows a guidance road data file which stores therein data items necessary for calculating a route or routes at the route calculation means and for performing route guidance, which may consist of, with respect to each of a number n of roads, a road number, length, road attribute data, shape data address/size, and guidance data address/size. Said road number is set in a manner independent on each direction (approaching path, return path) with respect to each road between adjacent branch points. As shown in Fig. 3(A), said road attribute data used as road guidance auxiliary information data is the data which may represent whether a road of interest is an elevated track, a side access to such elevated track, subway road, or a side access to the subway road, along with information as to the lane number. As shown in Fig. 2(B), when each road is subdivided into segments at a plurality of nodes (knots), said shape data has coordinate data consisting of the east longitude and north latitude with respect to each node number m.

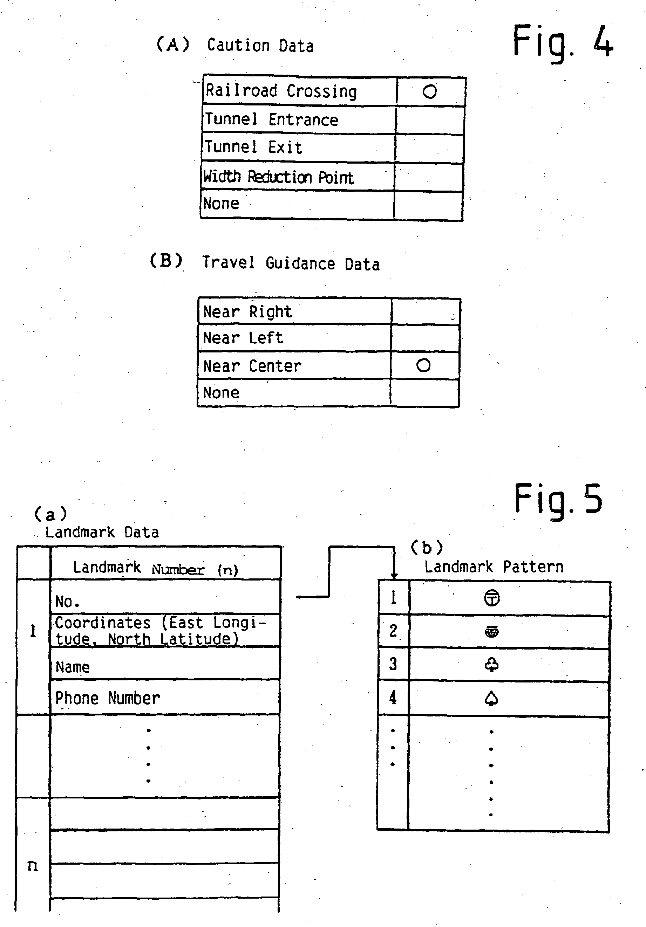

As shown in Fig. 2(C), said guidance data may consist of an intersection (or branch point) name, caution data, road name data, road name voice data address/size, and course data address/size. As shown in Fig. 4(A), said caution data is the data for indication of whether a present vehicle location is at a railroad crossing, tunnel entrance, tunnel exit, width-reduced point, or none; the data is for use in calling driver's attention when the vehicle is at certain locations such as railroad crossings, tunnels and the like, other than branch points. As shown in Fig. 3(B), said road name data is the data which may represent road type information of a highway, city speed way, toll road or ordinary public road (national road, prefectural road, others) as well as information as to whether the vehicle is presently on a main lane or access path with respect to highways, city speed ways, and toll roads, which data may be constituted from road type data and further a subsidiary or inter-type number indicative of individual number data within each road type.

As shown in Fig. 2(D), said course data may consist of a course road number with respect to each of a course number k, course name or title, course name voice data address/size, course direction data, and travel guidance data. Said course name also includes a district name. Also, the course direction data may be the data which indicates invalidity (no use of the course direction data), unnecessity (no guidance performed), and several direction information items such as the go-straight, right direction, diagonally right direction, back-to-the-right direction, left direction, diagonally left direction, and back-to-the-left direction. As shown in Fig. 4(B), said travel guidance data stores therein data items for use in providing guidance as to which lane is to be selected for a travel in cases where a road of interest has a plurality of lanes; this data may specify whether a road of interest is the near-the-right, near-the-left, near-the-center, or none.

Fig. 5 shows landmark data.

As shown in Fig. 5(a), with respect to each landmark, the landmark data may consist of a number, coordinates (east longitude, north latitude), title or name, and phone number, thus permitting registration of patterns of landmarks for use in being actually displayed on a map on a number-to-number correspondence basis as shown in Fig. 5(b).

An explanation will now be given of the navigation processing of the present invention.

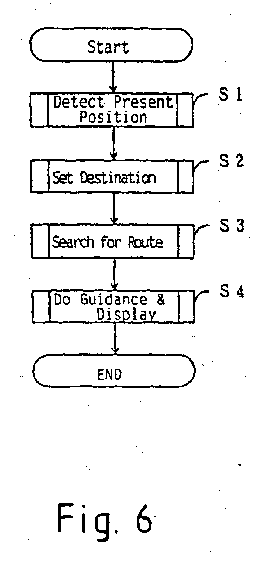

Fig. 6 is a diagram for explanation of the flow of an entire system of the navigation apparatus in accordance with the invention.

When a program(s) is/are read out of the information storage device 3 into the CPU 40 of the central processing device 4, the program for route guidance gets started. The steps are: (1) let the present position detection device 2 detect a present position for displaying a nearby area map with such detected present position being as its center while simultaneously displaying the name of the present position, genre landmarks as set and others (step S1); (2) set a destination by use of a target name such as a place name, facility name or the like, telephone number, administrative address, registered point, road name and the like (step S2); then, (3) perform a route search in a range from the present position toward the destination (step S3). Once the route is determined, route guidance and display will be recurrently carried out until the vehicle actually arrives at the destination while allowing the present position detection device 2 to continue tracking the present position loci (step S4). In a case where an input of a temporary stop-and-stay setting is made before arriving at the destination, a search area is set to perform a search again within such search area causing similar route guidance to be iteratively carried out until vehicle's arrival at the destination. It should be noted that when tracking the present position detects occurrence of an out-of-the-route event, an entire or full range of route is again re-searched for from a present location to the destination as set at step S2; or alternatively, the search area is updated for execution of the re-search with an intersection on the guidance route in the nearby area near or around the present location being as a destination.

Next, the automatic re-search processing of the invention will be explained hereinafter.

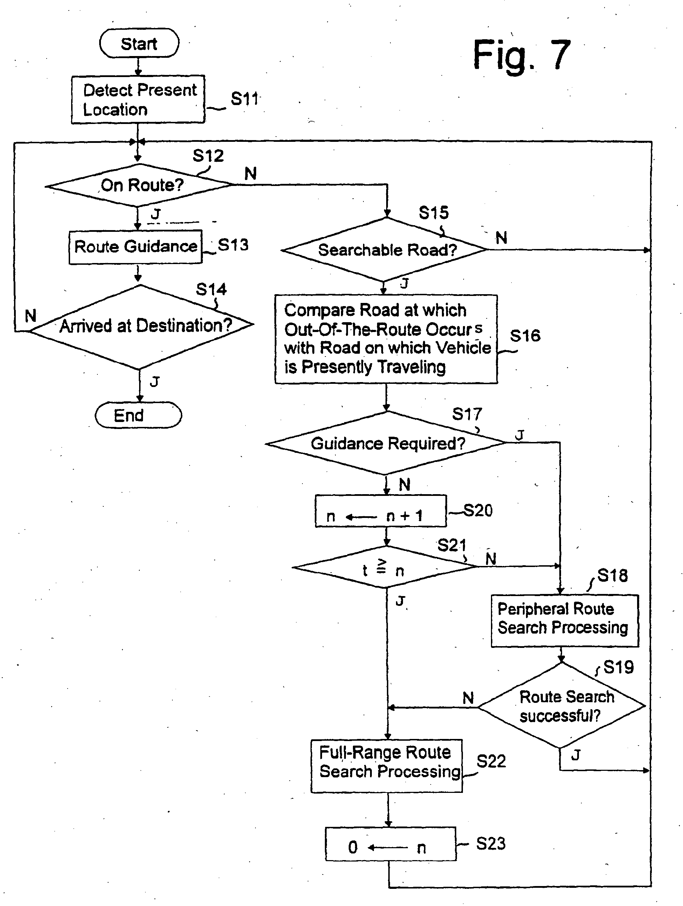

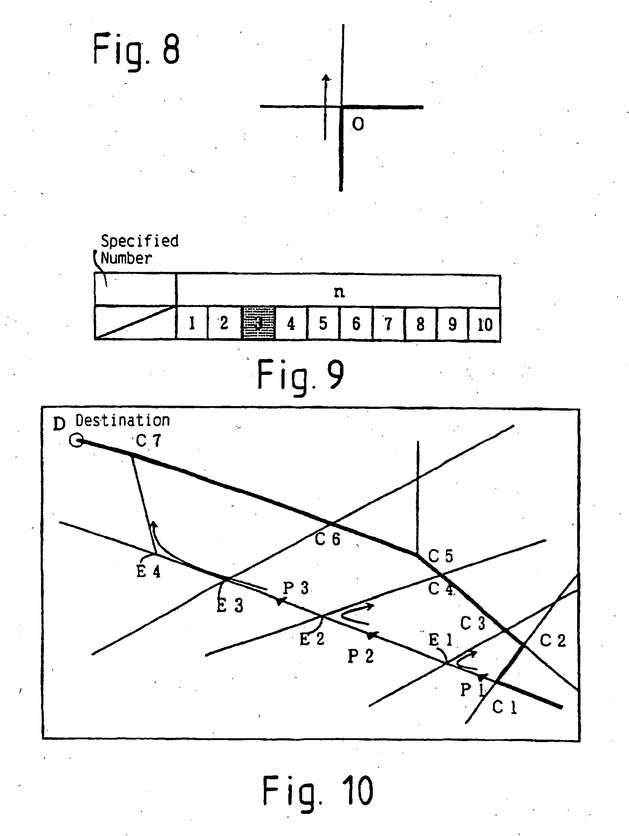

Fig. 7 is a diagram showing a search processing flow of the present invention, Fig. 8 is a diagram for explanation of a method of judging whether guidance is required or not, and Fig. 9 is a diagram showing a re-search method.

Shown in Fig. 7 is a processing routine to be performed after determination of route to a destination and during travel along this route. First of all, detect a present location (step 11), judge whether the locus of such detected present location is on the route (step 12), continue performing route guidance if it is on the route (step 13), and perform this guidance until the vehicle actually arrives at the destination (step 14). On the other hand, if the vehicle is out of the route (step 12N), judge whether a present location is on a search-executable road such as a narrow back street, parking area or the like (step 15); if it is not such search-executable one (step 15N) then it will be necessary for the vehicle to travel until it is encountered with any one of search-executable roads, streets or paths. If it is a search-executable road (step 15Y) then judge whether guidance is necessary or not by comparing a road at a certain location whereat the vehicle becomes out of the route with a road along which the vehicle is presently travelling (step 16, step 17).

The processings at this step 16 and step 17 are such that as shown in Fig. 8, by way of example, where the guidance route is determined in a such way that the vehicle is expected to turn to the right (see a fat line in the drawing) at an intersection O, any guidance is to be judged to be unnecessary when the vehicle behaves to go straight ahead by passing through such intersection O (see an arrow in the diagram) by interpreting this situation such that occurrence of this out-of-the-route event is based on the driver's exact intention. In other words, it is judged, by comparing the road along which the vehicle is presently running with a route extending through the intersection O, that any guidance is unnecessary upon detection of vehicle's going straight at an intersection to be turned.

Where guidance is judged to be necessary at step 17 (step 17Y), set a search area to perform a route search processing with respect to a nearby range around the present location with an intersection on the original route being as a destination (step 18); if such route search was successful (step 19Y), then allow the vehicle to travel along a route turning back to the original route (fat line), and repeat the processings following the step 12.

Where no guidance is judged to be necessary at step 17, in other words, when the vehicle behaved to go straight passing through the intersection to be turned, count up the value of a counter by one. Then, judge whether such count-up value of the counter is greater than or equal to a predefined number n; if it is less than the predefined number n then perform a peripheral or nearby-area search for turning back to the original route. If it is greater than or equal to the predefined number n then newly effectuate a full-range route search up to a target location without regard to such original route while causing the counter value to be reset. The reason for this is as follows: Occurrence of only a single go-straight event at the intersection to be turned still contains the possibility of a driver's mistake of merely forgetting to turn; in view of this, the apparatus is so designed as to effectuate the full-range route search by judging that the driver has no intentions to get back to the original route when the vehicle continues going straight via a plurality of intersections to be turned.

The predefined number n which is used as part of the judgment criteria as to whether the full-range route search is to be done may be settable on a case by case basis to be 1, 2, 3... ... ... 10 as shown in a table of Fig. 9, by way of example. If n = 1 then a full-range route search will be carried out immediately when the vehicle goes straight to pass through a single intersection to be turned; if n = 10 then such full-range route search will be done first after the vehicle has traveled straightforward to pass through a series of ten intersections to be turned. Typically, n = 3 to 5 or therearound may be adequate for selection; however, the following description as will be presented in conjunction with Fig. 10 assumes a setting of n = 3 in Fig. 9―that is, an exemplary case where it is judged that the driver has no specific intentions to get back at the original route exclusively when his or her vehicle has traveled straightforward by passing through a set of three subsequent intersections to be turned.

As shown by fat line in Fig. 10, where a guidance route is a route which extends through intersections C1, C2, C3, C4, C5, C6 and C7 in this order to reach a destination D, when the vehicle does not turn to the right at the intersection C1 and continues going straight, and if its present location is at a point P1, the counter is subjected to +1; however, since the count value remains less than 3, a nearby-area route search to get back to the route as designated by the fat line is performed with a search area being set. Regardless of the fact that this search results in a route for turning to the right at an intersection E1 being recommended by guidance, if the vehicle passes through this intersection E1 straightforwardly then a count-up is carried out providing "2." At this time, since the count value is still less than 3, a nearby-area route search for getting back to the original route is performed at a present location P2. Irrespective of the fact that this search results in a route being guided for turning to the right at the intersection E2, if the vehicle passes through this intersection E2 straightforwardly then the resulting count value becomes equal to "3;" at the present position P3, a full-range route search is effectuated since it is judged that the driver has no intentions to get back to the original route.

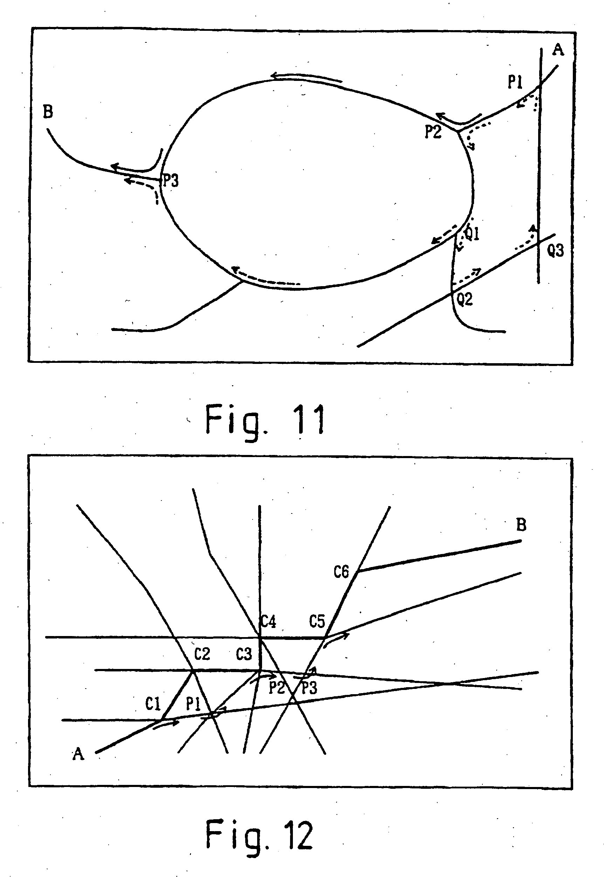

Fig. 11 is a diagram showing another embodiment of the present invention.

Fig. 11 is a diagram showing an example which is designed to select either one of the nearby-area route search and full-range route search in conformity with the type of a road on which the vehicle becomes out of the route, wherein the full-range route search processing is to be done when it is judged that the road type is a loop-like lane, toll-road, or the like.

In a guidance route (a solid arrow line in the drawing) which extends from a direction A to enter a loop-like lane such as a city speed-way at a branch point P2 and which then drops down from the loop-like lane at a branch point P3 to go toward a direction B, a certain case is shown in which the vehicle erroneously turns to the opposite direction at the branch point P2 as indicated by a dotted line, which results in a route being re-searched (near-by area route search) which is for getting back at the branch point P1 after dropping down at a branch point Q1 and travelling via a branch point Q2 and branch point Q3. However, in the case of such loop-like lane, it should be expected that if the vehicle does not drop down at the branch point Q1 and still travels along the loop-line Lane as designated by a dotted line, then it would arrive at a branch point P3; if it keeps running straightforwardly without dropping down at the branch point Q1, then it is judged that the driver intentionally causes such out-of-the-route event thus permitting effectuation of the full-range route search. Such a case will not exclusively be limited to loop-like lanes; with regard to specific types of roads or streets which have apparently distinguishable entrance and exit points, such as toll roads or agricultural paths, there will be cases where performing a full-range route search toward a destination remains better in possibility of obtaining good results than returning to the original route upon occurrence of an out-of-the-route event. Accordingly, it is possible to provide better guidance by judging whether the type of a road relating to occurrence of an out-of-the-route is one of specific types of roads such as loop-like roads, toll roads and the like and then performing a full-range route search depending upon such judgment result.

Fig. 12 is a diagram showing a further embodiment of the present invention.

In Fig. 12, there is shown a case where when a route is defined from the direction A through the intersections C1, C2, C3, C4, C5 and C6 toward the direction B, the vehicle becomes out of the route at intersection C1 to turn to the right as indicated by an arrow of solid line, and behaves to approach from an intersection P1 to the intersection C3 by ignoring a re-search based route guidance which recommends getting back from a next intersection P1 to intersection C2, and further is out of the original guidance route at the intersection C3 to approach the intersection P2, moreover at this time continues running toward an intersection P3 and the intersection C5 from intersection P2 by ignoring guidance which recommends a route returning from intersection P2 to intersection C4, and still further at intersection C5 travels out of the original route at intersection C5. In this way, in certain cases where the vehicle acts to pass through an increased number of intersections along a searched route―by turning at each of a series of intersections, or by continuing running straightforward thereat―against recommendation of route guidance, it may be considered that in most cases a presently recommended route under guidance does never meet the driver's preferences. In such case also, it should be required to execute the full-range route search. If this is the case, it will be preferable that the apparatus is designed in a way such that the full-range route search is effectuated when a predetermined number of successive out-of-the-route events take place, which number may be an appropriate value as selected from a range of from 2 to 10. Additionally, in cases where such out-of-the-route events occur frequently, the apparatus may also be arranged such that certain kind of out-of-the-route events due to vehicle's turning are distinguished in weighting parameter from remaining kinds of out-of-the-route events due to straightforward movements―for instance, the weighting of the former is determined to be half that of the latter―for permitting effectuation of the full-range route search when the total number of out-of-the-route occurrences becomes equivalent to a specified value.

In the way as described above, the peripheral or nearby-area route search is terminated for the first time to be replaced with a full-range route search exclusively when it is judged that the driver intentionally causes his or her vehicle to be out of a presently recommended guidance route; as a consequence, the full-range route search may be prevented from being carried out unnecessarily. On the other hand, since mere repetitive execution of only peripheral route searches will no longer happen, it is possible to provide adequate guidance according to the driver's intentions while at the same time enabling reduction of search processing time duration.

As has been described above, in accordance with principles of the present invention, the vehicle navigation apparatus is specifically arranged so that it judges that a vehicle driver has no intentions to get back to an initial route when his or her vehicle behaves to go straight passing through one or more intersections to be turned, and then effectuate a re-search processing with respect to a full-range covering a destination therein. Consequently, it becomes possible to selectively make use of either one of the nearby-area route search and full-range route search successfully upon occurrence of out-of-the-route events, which may in turn reduce search time duration while simultaneously enabling accomplishment of adequate route guidance that meets driver's intentions.

## Claims

1. A vehicle navigation apparatus comprising:
present position detection means (2) for detecting a present position of a vehicle;
out-of-the-route recognition means (S12) for recognizing occurrence of an out-of-the-route;
route search processing selection means (S21) for, when said out-of-the-route recognition means recognizes occurrence of an out-of-the-route, selecting a near-the-present-position route search processing (S18) or an entire route search processing (S22) to the destination;
route search means (S18, S22) for searching in conformity with a route search processing selected by said route search processing selection means;
out-of-the-route condition judgment means (S16, S17) for judging condition upon occurrence of an out-of-the-route as recognized by said out-of-the-route recognition means by judging, if a present location of the vehicle is on a search-executable road, that a vehicle driver intentionally caused the out-of-the-route when the vehicle went straight by passing through a predefined number of intersections to be turned and/or the out-of-the-route occurred on a specific type of road; and
guidance means for providing guidance along a route as searched by the route search means, wherein said route search processing selection means (S21) selects the entire route search processing to destination when said out-of-the-route condition judgment means judges upon occurrence of an out-of-the-route that a vehicle driver intentionally caused the out-of-the-route.

## Patentansprüche

1. Fahrzeugnavigationsvorrichtung mit:
einem Aktuelle-Position-Detektionsmittel (2) zum Detektieren einer aktuellen Position eines Fahrzeugs;
einem Routenabweichungserkennungsmittel (S12) zum Erkennen eines Auftretens eines Abweichens von der Route;
einem Routensuchverarbeitungsauswahlmittel (S21) zum Auswählen einer Routensuchverarbeitung in der Nähe der aktuellen Position (S 18) oder einer Gesamtroutensuchverarbeitung (S22) zu dem Ziel, wenn das Routenabweichungserkennungsmittel ein Auftreten eines Abweichens von der Route erkennt;
einem Routensuchmittel (S 18, S22) zum Suchen gemäß einer durch das Routensuchverarbeitungsauswahlmittel ausgewählten Routensuchverarbeitung;
einem Routenabweichungsbedingungsbeurteilungsmittel (S 16, S 17) zum Beurteilen einer Bedingung bei einem Auftreten eines von dem Routenabweichungserkennungsmittel erkannten Abweichens von der Route durch Beurteilen, wenn sich eine aktuelle Position des Fahrzeugs auf einer Straße befindet, auf der eine Suche ausführbar ist, dass ein Fahrer des Fahrzeugs das Abweichen von der Route absichtlich bewirkt hat, wenn
das Fahrzeug geradeaus gefahren ist, indem es eine im Voraus festgelegte Zahl von Kreuzungen, an denen es hätte abbiegen sollen, passiert hat und/oder
das Abweichen von der Route auf einem bestimmten Straßentyp aufgetreten ist; und
einem Führungsmittel zum Bereitstellen einer Führung entlang einer durch das Routensuchmittel gesuchten Route,
bei der das Routensuchverarbeitungsauswahlmittel (S21) die Gesamtroutensuchverarbeitung zu dem Ziel auswählt, wenn das Routenabweichungsbedingungsbeurteilungsmittel bei einem Auftreten eines Abweichens von der Route beurteilt, dass ein Fahrer des Fahrzeugs das Abweichen von der Route absichtlich bewirkt hat.

## Revendications

1. Appareil de navigation pour véhicule comprenant:
des moyens de détection de position actuelle (2) pour détecter la position actuelle d'un véhicule ;
des moyens (S12) de reconnaissance de sortie d'itinéraire pour reconnaître l'occurrence d'une sortie d'itinéraire ;
des moyens (S21) de sélection de traitement de recherche d'itinéraire pour, lorsque lesdits moyens de reconnaissance de sortie d'itinéraire reconnaissent l'occurrence d'une sortie d'itinéraire, sélectionner un traitement (S18) de recherche d'itinéraire proche de la position actuelle ou un traitement (S22) de recherche d'itinéraire complet jusqu'à destination ;
des moyens de recherche d'itinéraire (S18, S22) pour effectuer la recherche conformément à un traitement de recherche d'itinéraire sélectionné par lesdits moyens de sélection de traitement de recherche d'itinéraire ;
des moyens (S16, S17) d'évaluation d'une situation de sortie d'itinéraire pour évaluer une situation de sortie d'itinéraire reconnue par lesdits moyens de reconnaissance de sortie d'itinéraire en évaluant, si un emplacement actuel du véhicule se trouve sur une route où l'on peut effectuer une recherche, qu'un conducteur de véhicule a provoqué intentionnellement la sortie d'itinéraire lorsque le véhicule est arrivé tout droit en passant par un nombre prédéfini d'intersections au niveau desquelles il a dû tourner et/ou que la sortie d'itinéraire s'est produite sur un type de route spécifique ; et
des moyens de guidage pour assurer un guidage le long d'un itinéraire tel que recherché par les moyens de recherche d'itinéraire, dans lequel lesdits moyens (S21) de sélection de traitement de recherche d'itinéraire sélectionnent le traitement de recherche d'itinéraire complet jusqu'à destination, lorsque lesdits moyens d'évaluation de situation de sortie d'itinéraire évaluent, lors de l'occurrence d'une situation de sortie d'itinéraire, qu'un conducteur de véhicule a provoqué intentionnellement la sortie d'itinéraire.
